# FASCICULE DE BREVET EUROPEEN

(11) **EP 1 440 881 B1**
(45) Date de publication et mention de la délivrance du brevet: **07.12.2005**
(21) Numéro de dépôt: 04290171.0
(22) Date de dépôt: 22.01.2004
(51) Int. Cl.: B64C 13/28, F16C 7/02

(54) **Biellette de commande pour appareils aéronefs et autres**
Verstellhebel für Flugzeuge oder anderes
Actuating rod for aircraft or other

(30) Priorité: 27.01.2003 FR 0300879
(43) Date de publication de la demande: 28.07.2004
(73) Titulaire: Louit, Claude, 32400 Sarragachies (FR)
(72) Inventeur: Louit, Claude, 32400 Sarragachies (FR)

(56) Documents cités:
- GB-A- 1 603 732
- US-B1- 6 349 615

## Description

La présente invention concerne une biellette de commande pour appareils aéronefs et autres, comportant un tube en aluminium dans lequel est insérée, respectivement à ses deux extrémités, une tige plate portant une rotule, laquelle rotule est maintenue par le tube. Une telle biellette de commande est décrite dans GB-A-1 603 732.

Actuellement les biellettes de commande de pilotage des petits appareils de l'aéronef et autres, sont construites selon le principe suivant : aux deux extrémités d'un grand tube en aluminium est inséré respectivement un deuxième petit tube en acier recuit de diamètre légèrement inférieur au premier. Ensuite, les deux extrémités du grand tube sont écrasées pour donner un assemblage avec les petits tubes qu'elles renferment, de manière que les deux extrémités forment des parties plates et robustes dont les éléments sont bloqués en traction. Ensuite, sur la partie plate de chaque extrémité du grand tube est effectué un trou transversal et circulaire pour loger une rotule. La rotule est maintenue dans le logement au moyen d'une bague spéciale placée à sa périphérie et cette bague est immobilisée avec des goupilles toriques placées sur les deux faces extérieures, pour empêcher un délogement partiel de la bague dans un mouvement latéral.

Cette conception connue présente de nombreux inconvénients ; en effet, l'association d'une bague et d'une goupille torique pour maintenir une rotule sur un manche de commande constitué en partie d'un tube en acier et d'un tube en aluminium, pour un appareil volant, sont des facteurs qui fragilisent la solidité et la rigidité dans le temps du manche de pilotage. Effectivement, les pièces telles que les bagues et les goupilles sont des éléments très sollicités et sensibles à l'usure. De plus , le nombre de pièces à assembler pour construire une telle biellette pour manche de commande, augmente la complexité de réalisation, ce qui occasionne un coût de fabrication relativement important.

Aussi, l'invention objet des présentes permet d' éviter les inconvénients susmentionnés, en ce qu'elle facilite la conception d'une biellette en simplifiant les opérations de montage. En outre, cette conception donne plus directement et simplement le positionnement de la rotule dans le tube et permet l'immobilisation de sa cage sur les extrémités du tube, avec moins de pièces, réduisant le temps de montage et le coût de revient.

L'invention objet des présentes, concernant une biellette de commande des appareils volants, tels qu' avions, aéronefs et autres, comprend un premier tube cylindrique en aluminium, dont les deux extrémités sont préalablement aplaties sur une longueur suffisante, pour se rapprocher d'une forme oblongue, et dans les deux extrémités dudit tube est insérée respectivement une petite tige plate en métal approprié, tel qu'en aluminium, laquelle tige plate comporte à une extrémité un évidement longitudinal et à l'opposé un évidement circulaire dans lequel est logée une rotule, en ce que les deux évidements sont placés dans l'axe médian de la longueur de la tige plate, et ladite tige plate est introduite en bout de tube par son extrémité comportant l'évidement longitudinal et est complètement insérée de façon à occulter provisoirement la rotule dans la partie du tube aplatie de manière appropriée.

Les deux évidements sont creusés et formés sur toute l'épaisseur de la tige plate de manière à la traverser de part en part. L'évidement longitudinal est ouvert sur une extrémité de ladite tige plate qui forme deux avancées latérales et longitudinales dont les extrémités sont orientées vers l'intérieur, guidant le positionnement dans le tube lors du montage.

Les deux avancées latérales et longitudinales de l'évidement longitudinal, de la tige plate, lors de l' introduction dans une des extrémités du tube, se prolongent au delà de la partie aplatie du tube vers la zone cylindrique, donnant une transition progressive du passage de la forme aplatie à la forme cylindrique dudit tube et renforcent ces zones éventuellement fragilisées, si besoin est.

Les deux faces parallèles de la cage de la rotule comportent respectivement sur leur pourtour un épaulement circulaire dont le profil compose un angle droit et, d'autre part, l'épaisseur de la tige plate est égale à la hauteur de la périphérie centrale de la cage de la rotule de manière que les deux faces de ladite tige plate arrivent au niveau des deux épaulements périphériques de la cage de la rotule.

L'assemblage du montage effectué à chaque extrémité du tube cylindrique 1, est réalisé par une opération simultanée de compression et de découpe circulaire sur les deux faces aplaties dudit tube, par un appui circulaire sur les deux épaulements et sur les deux faces parallèles de la tige plate autour de la cage de la rotule, qui joue un rôle de poinçon.

Selon une variante de réalisation, le positionnement précis de la cage de la rotule, dans le tube, est déterminé par un trou transversal de positionnement pré-effectué dans la partie aplatie du tube, de manière que l'axe de rotation de ladite rotule se confonde avec l'axe du trou de positionnement.

La présente invention est exposée ci-après plus en détail à l'aide de dessins représentant une forme de réalisation préférée, donnée à titre d'exemple non limitatif.
La figure 1 représente, une vue longitudinale de la biellette de commande pour appareil aéronef, avec une extrémité partiellement éclatée.
La figure 2 représente succinctement, à une autre échelle, une vue de profil d'une extrémité de la biellette.
La figure 3 représente, à une autre échelle, une vue de face d'une extrémité de la biellette avec plus de détails.
La figure 4 représente, une vue de profil de l'extrémité de la biellette selon la fig. 3
La figure 5 représente une vue longitudinale de face, de la tige plate, montrant les deux évidements et son pourtour extérieur particulier.
La figure 6 représente, en coupe transversale, le positionnement de la tige plate avec la rotule dans le tube pré-aplati.
La figure 7 représente, en coupe transversale, l'opération intermédiaire sur la partie aplatie du tube pour découvrir la cage de la rotule.
La figure 8 représente, en coupe transversale, l'opération finale montrant la rotule sertie par le tube cylindrique.

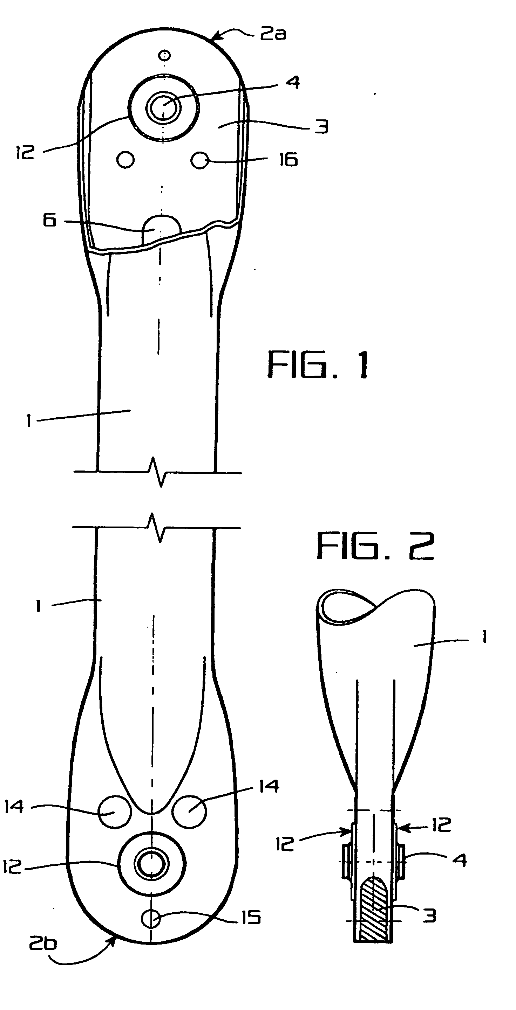

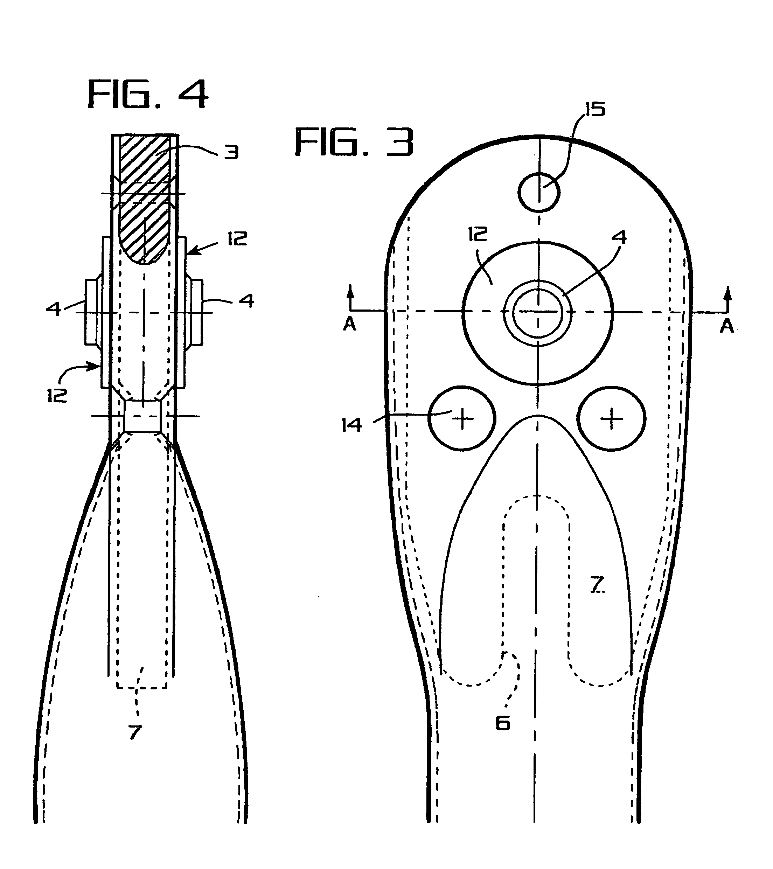

L'invention objet des présentes, concernant une biellette de commande pour appareil aéronef et autres telle que représentée en figures 1 à 8, comprend un tube cylindrique 1 en aluminium de longueur variable, dans lequel est introduit par chacune de ses deux extrémités 2a et 2b une tige plate 3 et courte qui porte une rotule 4, lesquelles rotules sont positionnées entre elles de façon symétrique et immobilisées au moyen des extrémités du tube cylindrique 1, dont la manière est décrite dans le texte qui suit. Les extrémités 2a et 2b sont préalablement post-formées pour passer de la for-me cylindrique à une forme sensiblement oblongue, sur une longueur suffisante et avec deux faces avantageusement aplaties pour intégrer respectivement et complè-tement la longueur des tiges plates 3.

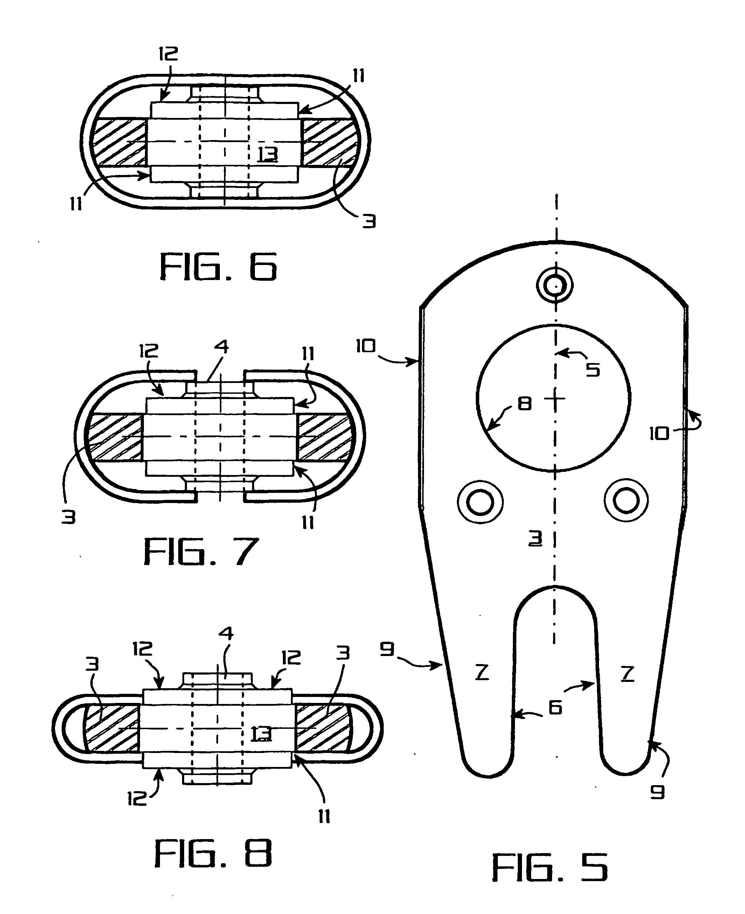

Les tiges plates 3 plutôt courtes (fig.5), comportent respectivement sur un bout et dans l'axe 5 longitudinal et médian de sa face la plus large, un évidement longitudinal 6 sur un tiers de la longueur de ladite tige plate. L'évidement 6 est ouvert sur l'extrémité de la tige 3 et forme deux avancées 7 latérales et symétriques dont leur largeur décroît vers l'axe médian 5, pour faciliter le montage dans le tube 1. À l'opposé de l'évidement longitudinal 6, la tige plate comporte un deuxième évidement 8 circulaire et transversal, sur le même axe médian 5 de l'évidement précédant, pour loger une rotule 4. Cette rotule est positionnée dans son logement préalablement à l'introduction de la tige dans l'extrémité du tube 1.

Lors du montage de la biellette, les tiges plates 3 sont présentées aux extrémités 2a et 2b du tube 1 par leur bout comportant l'évidement longitudinal 6 qui compose les deux avancées latérales 7. La tige plate 3 a sa largeur qui décroît à partir de sa mi-longueur et cela jusqu'au bout des avancées 7 latérales, donnant des parois latérales 9 obliques par rapport à l'axe médian 5, de manière à obtenir sur une portion de longueur une largeur de plaque 3 inférieure à la largeur du tube 1, permettant de faciliter l'insertion et le positionnement provisoire dans ledit tube.

Les deux avancées 7 latérales de la tige plate 3, font la liaison entre la forme aplatie et la forme cylindrique du tube 1, c'est à dire que lors de l'insertion de la tige plate dans le tube, les deux avancées 7 dépassent la partie compressée et continuent leur progression dans la zone cylindrique du tube déformant sensiblement celle-ci et renforçant de ce fait cette partie éventuellement fragilisée par le passage de la forme plate à la forme cylindrique.

La tige plate 3 est engagée facilement jusqu'à sa mi-longueur, par une extrémité dans le tube 1, comme indiquée dans les paragraphes précédents, et comme la partie arrière de la tige plate logeant la rotule 4, possède une largeur sensiblement égale à celle de la portion aplatie de l'extrémité du tube 1 et que ses cotés latéraux 10 sont parallèles, elle est introduite en force, par tout moyen approprié, jusqu'à occulter la rotule 4 ainsi que ladite tige 3 dans sa totalité. La cage de la rotule 4 comporte respectivement sur ses deux faces parallèles 12 un épaulement 11 périphérique et symétrique entre eux, dont le profil forme un angle droit. La hauteur des épaulements périphériques 11, des faces de la rotule, est supérieure à l'épaisseur de la paroi du tube cylindrique 1.

D'autre part, l'épaisseur de la tige plate 3 est égale à la hauteur de la périphérie centrale 13 de la cage de la rotule, de telle sorte que les faces de la tige plate arrivent de part et d'autre au niveau de la base des épaulements 11, de manière que lors de la pression sur les deux faces du tube 1 pour l'assemblage, comme cela est décrit plus loin, la paroi du tube puisse s'appuyer simultanément sur les épaulements 11 et sur les deux faces de la tige plate qui se trouvent au même niveau .

Lors de cette opération d'insertion dans le tube, la tige se positionne provisoirement par le biais de sa partie la plus large qui se bloque par frottements contre les parois intérieures du tube 1. Ensuite, à l'aide d'un emporte-pièce approprié, une pression et une découpe circulaire sont simultanément effectuées sur les deux faces aplaties du tube qui cachent intérieurement les deux faces de la rotule dont la cage extérieure 12 sert de poinçon lors de ladite pression.

Cette opération de poinçonnage produit deux découpes circulaires dans la paroi du tube 1, lesquelles découpes sont égales au pourtour de la face extérieure 12 de la cage, puis dans un second temps par une large pression sur le pourtour de la découpe du tube, ce dernier vient sertir la cage de la rotule par appui et serrage sur l'épaulement 11. Cette opération d'assemblage est effectuée simultanément sur les deux faces de la rotule 3 ou selon une variante de réalisation en deux temps, une face après l'autre.

La consolidation des assemblages aux extrémités du tube cylindrique 1 avec les tiges plates 3 et les cages des rotules 4, est réalisée avec des rivets 14 et 15 positionnés dans des trous 16 transversaux effectués autour et proche de la cage de ladite rotule.

L'invention objet des présentes est plus particulièrement destinée pour les commandes d'avions, d' aéronefs, d'hélicoptères, mais peut également être utilisée pour tous autres engins terrestres ou maritimes .

## Revendications

1. Biellette de commande pour appareil aéronef et autres, comportant un tube cylindrique (1) dont les deux extrémités (2a) et (2b) sont aplaties sur une longueur suffisante pour se rapprocher d'une forme oblongue, dans lesquelles deux extrémités dudit tube (1) est respectivement insérée une petite tige plate (3) en métal approprié, laquelle tige plate (3) comporte un évidement circulaire (8) dans lequel est logée une rotule (4), **caractérisée en ce que** la tige plate (3) comporte à une extrémité un évidement longitudinal et à l'opposé ledit évidement circulaire (8), **en ce que** les deux évidements (6 et 8) sont placés dans l'axe (5) médian et longitudinal de la face de la tige plate, laquelle tige (3) est introduite en bout de tube par son extrémité comportant l'évidement longitudinal (6) et est complètement insérée de façon à occulter provisoirement la rotule dans la partie du tube aplatie, et **en ce que** l'assemblage du montage aux extrémités du tube (1) est réalisé par une opération de compression et de découpe autour de la cage de la rotule.

2. Biellette de commande selon la revendication 1, **caractérisée en ce que** l'évidement longitudinal (6) est ouvert sur une extrémité de la tige plate (3) qui forme deux avancées (7) latérales, symétriques et longitudinales guidant le positionnement dans le tube (1) lors du montage.

3. Biellette de commande selon les revendications 1 et 2, **caractérisée en ce que** la tige plate (3) a sa largeur qui décroît à partir de sa mi-longueur et cela jusqu'au bout des avancées (7) latérales, donnant des parois latérales (9) obliques par rapport à l'axe médian (5), de manière à obtenir sur cette portion de longueur de la tige plate (3) une largeur inférieure à la largeur de la portion du tube aplatie.

4. Biellette de commande selon l'une des revendications 1 à 3, **caractérisée en ce que** la partie arrière de la tige plate (3) logeant la rotule (4) a les côtés latéraux (10) parallèles et une largeur sensiblement égale à celle de la portion aplatie de l' extrémité du tube (1).

5. Biellette de commande selon la revendication 1, **caractérisée en ce que** la cage de la rotule (4) comporte respectivement sur ses deux faces parallèles (12) un épaulement (11) périphérique et symétrique entre eux.

6. Biellette de commande selon les revendications 1 et 5, **caractérisée en ce que** le profil de l'épaulement (11) forme un angle droit dont la hauteur est supérieure à l'épaisseur de la paroi du tube cylindrique (1).

7. Biellette de commande selon la revendication 1, **caractérisée en ce que** l'épaisseur de la tige plate (3) est égale à la hauteur de la périphérie centrale (13) de la cage de la rotule (4) de telle sorte que les faces de la tige plate (3) arrivent de part et d'autre au niveau de la base des épaulements (11).

8. Biellette de commande selon les revendications 1 et 2, **caractérisée en ce que** les deux avancées (7) longitudinales de la tige plate, lors de l'introduction à une des extrémités du tube, se prolongent au delà de la partie aplatie dudit tube vers la zone cylindrique, donnant une transition progressive du passage de la forme aplatie à la forme cylindrique du tube (1).

9. Biellette de commande selon l'une quelconque des revendications 1 à 7, **caractérisée en ce que** l'assemblage du montage effectué à chaque extrémité du tube cylindrique (1), est réalisée par une opération simultanée de compression et de découpe circulaire sur les deux faces aplaties du tube (1), par un appui circulaire sur les deux épaulements (11).

10. Biellette de commande selon la revendication 1, **caractérisée en ce que** la consolidation de l'assemblage à chaque extrémité du tube (1) est réalisée avec des rivets (14) et (15) positionnés dans des trous transversaux effectués autour et proche de la cage de la rotule.

## Patentansprüche

1. Steuerstange für Luftfahrzeuge und dergleichen, bestehend aus einem zylindrischen Rohr (1), dessen beide Enden (2a) und (2b) über eine ausreichende Länge abgeflacht sind, um sich einer länglichen Form anzunähern, wobei in die beiden Enden dieses Rohrs (1) jeweils eine kleine Flachstange (3) ous geeignetem Metall eingeführt wird und diese Flachstange (3) an einem Ende eine längliche Aussparung (6) und auf dem gegenüberliegenden Ende eine kreisförmige Aussparung (8) aufweist, in der ein Kugelgelenk (4) gelagert ist, **dadurch gekennzeichnet, dass** die Flachstange (3) die kreisförmige Aussparung (8) aufnimmt und die beiden Aussparungen (6 und 8) in der Mittel- und Längsachse (5) der Flachstangenseite angeordnet sind, wobei die Stange (3) am Rohrstück über sein die Löngsaussparung (6) aufweisendes Ende eingeführt wird und derart vollständig eingeschoben wird, dass das Kugelgelenk im Bereich des abgeflachten Rohrs vorübergehend verdeckt wird, dass die Verbindung der Montage an den Rohrenden (1) durch einen Verdichtungs- und Schneidevorgang um den Mantel des Kugellagers ausgeführt wird.

2. Steuerstange noch Anspruch 1, **dadurch gekennzeichnet, dass** die löngliche Aussparung (6) an einem Ende der Flachstange (3) geöffnet ist, die zwei symmetrische und löngliche seitliche Vorsprünge (7) zur Führung der Anordnung im Rohr bei der Montage (1) bildet.

3. Steuerstange noch Anspruch 1 und 2, **dadurch gekennzeichnet dass** die Flachstonge (3) ihre Breite hat, die ab ihrer Mittellänge bis zum Ende der seitlichen Vorsprünge (7) abnimmt, wobei im Verhöltnis zur Mittelachse (5) schräge Seitenwände (9) derart entstehen, dass an diesem Längenabschnitt der Flachstange (3) eine Breite erreicht wird, die geringer als die Breite des Abschnitts des abgeflachten Rohrs (1) ist.

4. Steuerstange nach einem der Ansprüche 1 bis 3, **dadurch gekennzeichnet, dass** der Hinterbereich der Flachstange (3), auf dem das Kugelgelenk (4) gelagert ist, parallel zueinander verlaufende seitliche Schenkel (10) und eine etwa gleiche Breite wie der flache Abschnitt des Rohrendes aufweist.

5. Steuerstange noch Anspruch 1, **dadurch gekennzeichnet, dass** der Mantel des Kugelgelenks (4) jeweils an seinen beiden parallelen Seiten (12) periphere und zueinander symmetrische Ansätze (11) aufweist.

6. Steuerstange nach Anspruch 1 und 5, **dadurch gekennzeichnet, dass** das Profil des Ansatzes (11) einen rechten Winkel bildet, dessen Höhe größer als die Dicke der Wand des zylindrischen Rohrs (1) ist.

7. Steuerstange nach Anspruch 1, **dadurch gekennzeichnet, dass** die Dicke der Flachstange (3) der Höhe des Mittelumfangs (13) des Mantels des Kugelgelenks (4) derart gleicht, dass die Seiten der Flachstange (3) beidseitig auf Ebene der Basis des Ansatzes (11) auslaufen.

8. Steuerstange nach Anspruch 1 und 2, **dadurch gekennzeichnet dass** die beiden länglichen Vorsprünge (7) der Flachstange bei der Einführung in ein Rohrende über den abgeflachten Bereich des Rohrs hinaus in Richtung des zylindrischen Bereichs verlängert werden, wobei eine progressive Überleitung des Übergangs von der abgeflachten Form zur zylindrischen Form des Rohrs (1) gegeben ist.

9. Steuerstange nach einem der Ansprüche 1 bis 7, **dadurch gekennzeichnet, dass** die an jedem Ende des zylindrischen Rohrs (1) vorgenommene Verbindung der Montage durch einen gleichzeitigen Verdichtungs- und Kreisschnittvorgang an den beiden Flachseiten des Rohrs (1) durch eine kreisförmige Auflage auf den beiden Ansötzen (11) ausgeführt wird.

10. Steuerstange nach Anspruch 1, **dadurch gekennzeichnet, dass** die Verfestigung der Verbindung jedes Endes des Rohrs (1) mit Nieten (14) und (15) ausgeführt wird, die in um den Mantel des Kugelgelenks und in seiner Nähe ausgeführten Querlöchern angeordnet werden.

## Claims

1. Actuating rod for aircraft or other comprising a cylindrical tube (1) whose two ends (2a) and (2b) are flattened over a sufficient length to approach an oblong shape, a small flat rod (3) in suitable material being inserted in the two ends of said tube (1) respectively, said flat rod (3) comprises a circular cut-out (8) in which a ball-joint (4) is housed, **characterized in that** the flat rod (3) comprises at one end a longitudinal cut-out (6) and at the other end said circular cut-out (8), **in that** the two cut-outs (6 and 8) are positioned in the median and longitudinal axis (5) of the surface of the flat rod, said rod (3) is inserted into the tube tip via its end comprising the longitudinal cut-out (6) and is fully inserted so as to provisionally occult the ball-joint in the flattened part of the tube, and **in that** the mounting of the assembly at the ends of the tube (1) is made by a compression and cutting operation around the ball-joint cage.

2. Actuating rod as in claim 1, **characterized in that** the longitudinal cut-out (6) is open at one end of the flat rod (3) which forms two symmetrical, longitudinal side projections (7) to guide positioning in the tube (1) during assembly.

3. Actuating rod as in claims 1 and 2 **characterized in that** the width of the flat rod (3) decreases from its mid-length as far as the end of the side projections (7), giving oblique side walls (9) with respect to the median axis (5), so that the width obtained on this portion of the length of the flat rod (3) is narrower than the width of the flattened tube portion.

4. Actuating rod as in any of claims 1 to 3, **characterized in that** the rear part of the flat rod (3) housing the ball-joint (4) has parallel sides (10) and its width is substantially equal to that of the flattened end of tube (1).

5. Actuating rod as in claim 1, **characterized in that** the cage of ball-joint (4) on its two parallel sides (12) respectively comprises a peripheral shoulder (11), these shoulders being symmetrical.

6. Actuating rod as in claims I and 5, **characterized in that** the profile of shoulder (11) forms a right angle whose height is greater than the thickness of the wall of the cylindrical tube (1).

7. Actuating rod as in claim 1, **characterized in that** the thickness of the flat rod (3) is equal to the height of the central periphery (13) of the cage of ball-joint (4) so that the faces of the flat rod (3) arrive either side at the base of the shoulders (11).

8. Actuating rod as in claims 1 and 2, **characterized in that** the two longitudinal projections (7) of the flat rod, at the time of insertion into one of the tube ends, extend beyond the flattened part of said tube towards the cylindrical zone, providing progressive transitional change from the flattened shape to the cylindrical shape of the tube (1).

9. Actuating rod as in any of claims 1 to 7. **characterized in that** the mounting of the assembly made at each end of the cylindrical tube (1) is made by a simultaneous operation of compression and circular cutting on the two flattened faces of the tube (1) by circular bearing on the two shoulders (11).

10. Actuating rod as in claim 1, **characterized in that** the consolidation of the assembly at each end of tube (1) is obtained with rivets (14) and (15) positioned in transverse holes made around and close to the ball-joint cage.
